# EUROPÄISCHE PATENTSCHRIFT

(11) **EP 0 950 595 B1**
(45) Veröffentlichungstag und Bekanntmachung des Hinweises auf die Patenterteilung: **11.02.2004**
(21) Anmeldenummer: 99106160.7
(22) Anmeldetag: 07.04.1999
(51) Int. Cl.: B60T 13/57

(54) **Ventilbaugruppe für einen Unterdruck-Bremskraftverstärker**
Valve assembly for a vacuum brake booster
Ensemble soupape pour servofrein à vide

(30) Priorität: 16.04.1998 DE 19816767
(43) Veröffentlichungstag der Anmeldung: 20.10.1999
(73) Patentinhaber: Continental Teves AG & Co. oHG, 60488 Frankfurt (DE)
(72) Erfinder: Graichen, Kai-Michael, 63225 Langen (DE)

(56) Entgegenhaltungen:
- FR-A- 2 731 668
- FR-A- 2 734 228
- US-A- 5 056 413

## Beschreibung

Die Erfindung betrifft eine Ventilbaugruppe zum Steuern eines pneumatischen Unterdruck-Bremskraftverstärkers mit den Merkmalen des Oberbegriffs von Anspruch 1.

Ein derartiger Bremskraftverstärker ist aus der EP 0 655 039 B 1 bekannt geworden. Er stellt eine Weiterentwicklung des Unterdruck-Bremskraftverstärkers gemäß DE-OS 3 915 219 dar und weist einen sogenannten druckentlasteten Ventilkörper auf, wodurch das Verhältnis zwischen der auf den inneren Ventilsitz einwirkenden Rückstellkraft und der Anpresskraft des Unterdruck-Bremskraftverstärkers verbessert bzw. optimiert werden kann, was sich vorteilhaft auf die Wiederherstellung des Unterdrucks in der Arbeitskammer des Unterdruck-Bremskraftverstärkers im Anschluß an ein Bremsmanöver auswirkt.

Zur Verstärkung der über ein Bremspedal eingeleiteten Bremskraft wird bei derartigen Unterdruck-Bremskraftverstärkern die Arbeitskammer über die Ventilbaugruppe belüftet, d.h., es wird der innere Ventilsitz geöffnet, so daß die Arbeitskammer mit der umgebenden Atmosphäre verbunden und durch Einströmen von Luft der darin herrschende Unterdruck abgebaut wird. Damit ergibt sich am Arbeitskolben des Unterdruck-Bremskraftverstärkers eine Druckdifferenz, die zur Verstärkung der eingeleiteten Bremskraft benutzt wird. Die Öffnung des inneren Ventilsitzes setzt eine Relativbewegung zwischen Ventilkolben und Steuergehäuse voraus, die bei normalen Bremsvorgängen jedoch nicht sehr groß ist, weil vom hydraulischen Teil der Bremsanlage eine Reaktionskraft aufgebaut wird, die zusammen mit der eingeleiteten Bremskraft und der vom Unterdruck-Bremskraftverstärker erzeugten Verstärkungskraft ein dynamisches Gleichgewicht ergibt, bei dem der Öffnungsspalt am inneren Ventilsitz relativ klein bleibt. Jede Änderung der eingeleiteten Bremskraft führt zu einer Änderung des zuvor erreichten Gleichgewichts und durch entsprechende Bewegung des Ventilkolbens und des Steuergehäuses zu einem neuen Gleichgewicht.

Da im Strömungsweg zwischen umgebende Atmosphäre und Arbeitskammer ein Luftfilter angeordnet werden muß und konstruktiv bedingt nur vergleichsweise enge Strömungskanäle realisiert werden können, die zudem mehrere Richtungsänderungen aufweisen, ergeben sich bei der Belüftung der Arbeitskammer erhebliche Strömungswiderstände, die sich insbesondere dann als nachteilig erweisen, wenn bei einer heftigen Bewegung des Bremspedals die volle Verstärkungskraft möglichst schnell zur Verfügung gestellt werden soll.

Der Erfindung liegt die Aufgabe zugrunde, bei einer Ventilbaugruppe gemäß Oberbegriff des Anspruchs 1 dafür zu sorgen, daß die Arbeitskammer bei einer raschen Bewegung des Bremspedals schneller belüftet wird als bei normalen Bremsvorgängen. Mit anderen Worten, es soll in der Arbeitskammer des Unterdruck-Bremskraftverstärkers - ausgehend von einem mehr oder weniger großen Unterdruck - möglichst schnell Atmosphärendruck erreicht werden, um am Arbeitskolben rasch den maximalen möglichen Differenzdruck für die Bremskraftverstärkung bereitstellen zu können.

Dieses Ziel wird erfindungsgemäß dadurch erreicht, daß
- der Ventilträger aus einem äußeren Ringkörper und einer inneren, zylindrischen Hülse besteht, die relativ zum Ringkörper axial verschieblich angeordnet ist,
- zwischen radial nach außen- bzw. innenweisenden Flanschen, an der Hülse und am Ringkörper eine Dichtung vorgesehen ist,
- die Hülse mittels der zweiten Feder entgegen der Betätigungsrichtung der Kolbenstange gegen die Dichtung vorgespannt und von der Kolbenstange relativ zum Ringkörper in Betätigungsrichtung derart mitnehmbar ist, daß
- bei einer raschen Vorwärtsbewegung der Kolbenstange zwischen der Hülse und dem Ringkörper ein Durchströmquerschnitt freigegeben wird, über den der vierte Raum mit dem dritten Raum verbunden wird.

Die Erfindung geht von der Erwägung aus, daß sich das oben erwähnte dynamische Gleichgewicht zwischen der eingeleiteten Bremskraft und der verstärkungskraft einerseits wie der Reaktionskraft des hydraulischen Teils der Bremskraftanlage bei einer raschen Bewegung des Bremspedals erst mit einer gewissen Verzögerung einstellt und daß in derartigen Fällen eine größere Relativbewegung zwischen Ventilkolben und Steuergehäuse zu verzeichnen ist, die dazu ausgenutzt werden kann, eine weitere Ventilfunktion zu realisieren und für das Belüften der Arbeitskammer einen zusätzlichen Strömungsquerschnitt zur Verfügung zu stellen.

Ähnliche Erwägungen sind zwar auch schon bei aus den DE-U 89 08 040 und DE-U 90 15 412 bekannt gewordenen Vorrichtungen angestellt worden. Dabei handelt es sich aber um Ventilbaugruppen mit nicht druckentlasteten Ventilkörpern, die sich in ihrem konstruktiven Aufbau und in den Lösungsmerkmalen erheblich von der hier beanspruchten Ventilbaugruppe unterscheiden.

Zweckmäßige und vorteilhafte Ausgestaltungen und Abwandlungen des Erfindungsgedankens sind in den Unteransprüchen 2 bis 12 beschrieben. Weitere Einzelheiten werden anhand der in den Figuren 1 bis 5 dargestellten Ausführungsbeispiele näher erläutert. Es zeigen:
- Fig. 1: einen Längsschnitt durch die Ventilbaugruppe eines Unterdruck-Bremskraftverstärkers mit einer ersten Ausführungsform des Erfindungsgedankens,
- Fig. 2 bis 5: Teil-Längsschnitte von anderen Ausführungsbeispielen des Erfindungsgedankens,

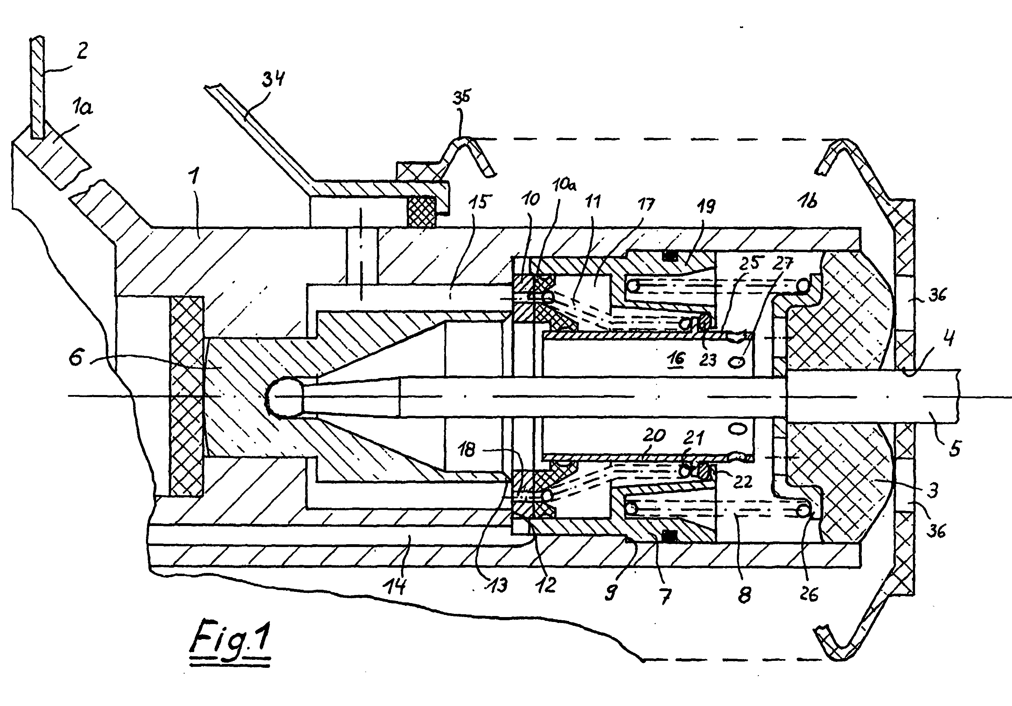

Die Ventilbaugruppe gemäß Fig. 1 umfasst als Hauptbestandteile ein Steuergehäuse 1, eine Kolbenstange 5, einen Ventilkolben 6 und einen Ventilteller 10, der zusammen mit dem Steuergehäuse 1 bzw. dem Ventilkolben 6 einen äußeren ringförmigen Ventilsitz 12 bzw. inneren Ventilsitz 13 bildet. Am vorderen, in der Zeichnung linken Ende ist das Steuergehäuse 1 über einen konischen Fortsatz 1 a mit dem Arbeitskolben 2 des Unterdruck-Bremskraftverstärkers verbunden, der nur andeutungsweise dargestellt ist. Das Steuergehäuse 1 ist innerhalb des Verstärkergehäuses 34 angeordnet, das durch eine elastische Manschette 35 ergänzt wird, die am hinteren, in der Zeichnung rechten Ende eine die Kolbenstange 5 umfassende Schutzkappe 4 mit Lufteinlässen 36 aufweist. Im hinteren Ende des Steuergehäuses 1 ist zwischen der Schutzkappe 4 und einem Federteller 26 ein Luftfilter 3 mit einer zentralen Ausnehmung für die Kolbenstange 5 angeordnet. Ferner ist im Steuergehäuse 1 ein Ringkörper 19 abdichtend angeordnet, der zur Abstützung einer auf der anderen Seite am Federteller 26 anliegenden Feder 8 dient. Mittels einer zweiten Feder 11, die sich an einer zum Ventilteller 10 gehörenden Dichtung 10 a und mittelbar am Ringkörper 19 abstützt, ist der Ventilteller 10 in Richtung auf das vordere Ende des Steuergehäuses 1 vorgespannt, so daß der Ventilteller 10 abdichtend am Ventilsitz 12 anliegt. Ferner ist im Steuergehäuse 1 eine die Kolbenstange 5 konzentrisch umgebende Hülse 20 mit einem nach außen weisenden Flansch 21 und einer nach rechts weisenden Verlängerung 25 angeordnet, die radiale Durchtrittsöffnungen aufweist. Der nach außen weisende Flansch 21 ist über eine Dichtung 23 an einem nach innen weisenden Flansch 22 des Ringkörpers 19 abdichtend abgestützt, womit die bereits erwähnte mittelbare Abstützung der Feder 11 am Ringkörper 19 realisiert ist. Damit wird ein Ventilträger 7 gebildet, der an einem Anschlag 9 des Steuergehäusese 1 anliegt und darin abdichtend geführt ist.

Durch die genannten Bauteile werden verschiedene Räume in der dargestellten Position der Ventilbaugruppe gegeneinander abgegrenzt. Die Kolbenstange 5 wird von einem Raum 16 umgeben, der bis in den Ventilkolben 6 hineinreicht und über nicht bezeichnete Durchlässe im Federteller 26, das Luftfilter 3 und die Lufteinlässe 36 mit der umgebenden Atmosphäre in Verbindung steht. Dieser Raum 16 wird durch den Ventilsitz 13 von einem zweiten Raum 15 abgegrenzt, der mit der Arbeitskammer des Unterdruck-Bremskraftverstärkers, die zwischen dem Arbeitskolben 2 und dem Verstärkergehäuse 34 ausgebildet ist, in Verbindung steht. Über die Durchlässe 18 im Ventilteller 10 und in der zugehörigen Dichtung 10 a ist außerdem der Raum 17 mit dem Raum 15 und der Arbeitskammer des Unterdruck-Bremskraftverstärkers verbunden. Der Raum 17 ist über die Dichtung 10 a und die Dichtung 23 von dem unter Atmosphärendruck stehenden Raum 16 abgetrennt.

Ferner ist im Steuergehäuse 1 ein Raum 14 ausgebildet, der permanent mit der Unterdruckkammer des Bremskraftverstärkers in Verbindung steht und über den Ventilsitz 12 vom Raum 15 abgetrennt ist.

Bei normaler Bremsbetätigung wird die Kolbenstange 5 und mit ihr der Ventilkolben 6 nach links verschoben, wodurch der Ventilsitz 13 geöffnet und dadurch eine Verbindung zwischen dem Raum 16 und dem Raum 15 hergestellt wird. Über diese Verbindung wird die Arbeitskammer des Unterdruck-Bremskraftverstärkers belüftet und es wird am Arbeitskolben 2 der gewünschte Differenzdruck erzeugt. Dadurch wird das Steuergehäuse 1 nach links, d.h. in die gleiche Richtung wie die Kolbenstange 5 bei einer Betätigung des Bremspedals bewegt, so daß sich im Zusammenwirken mit der vom hydraulischen Teil der Bremsanlage aufgebauten Reaktionsdruck ein dynamisches Gleichgewicht einstellt, bei dem der Ventilsitz 13 nicht mehr geöffnet ist und jede Bewegung der Kolbenstange 5 dazu führt, daß sich ein neues Gleichgewicht einstellt, indem das Steuergehäuse 1 der Bewegung der Kolbenstange 5 bzw. des Ventilkolbens 6 folgt.

Bei einer Entlastung des Bremspedals wird schließlich der Ventilsitz 12 geöffnet, so daß die Arbeitskammer des Unterdruck-Bremskraftverstärkers bei geschlossenem Ventilsitz 13 an die Unterdruckquelle angeschlossen und entsprechend evakuiert wird. Dadurch und durch die Kraft der Gerätefeder im Bremskraftverstärker wird auch das Steuergehäuse 1 nach rechts verschoben, so daß schließlich der Ventilsitz 12 wieder geschlossen ist, wenn in der Arbeitskammer der vorgesehene Unterdruck herrscht.

Bei einer sehr heftigen Betätigung des Bremspedals wird die Kolbenstange 5 zusammen mit dem Ventilkolben 6 relativ zum Steuergehäuse 1 verhältnismäßig weit nach links verschoben, bevor sich das erwähnte dynamische Gleichgewicht einstellt. Dadurch wird am Ventilsitz 13 ein größerer Strömungsquerschnitt als bei normalen Bremsungen bereitgestellt und die Arbeitskammer kann entsprechend schneller belüftet werden. Da dies aus den genannten Gründen vielfach nicht ausreicht und allgemein bei Notbremsungen eine möglichst kurze Ansprechzeit angestrebt wird, ist gemäß der Erfindung eine Hülse 20 vorgesehen, die gleichsinnig, mit der Kolbenstange 5 nach links bewegt wird und über die Durchtrittsöffnungen 27 in der Verlängerung 25 einen zusätzlichen Strömungsquerschnitt zur Verfügung stellt, wenn die Durchtrittsöffnungen 27 die bezüglich des Steuergehäuses 1 ortsfeste Abdichtung 23 überfährt. Dieser zusätzliche Strömungsquerschnitt wird nur wirksam, wenn die Relativbewegung zwischen Kolbenstange 5 und Steuergehäuse 1 so groß ist, daß der Abstand zwischen der Hülse 20 und dem Federteller 26 überwunden wird und die Hülse 20 vom Ventilteller 26 nach links mitgenommen wird, bis die Durchtrittsöffnungen 27 eine Verbindung zwischen dem Raum 16 und dem Raum 17 herstellen. Die Arbeitskammer des Unterdruck-Bremskraftverstärkers kann dann zusätzlich zu dem am Ventilsitz 13 freiwerdenden Querschnitt noch über die Durchtrittsöffnungen 27, den Raum 17 und die Durchlässe 18 im Ventilteller 10 bzw. in der zugehörigen Dichtung 10 a belüftet werden.

Es muß noch darauf hingewiesen werden, daß bei der Darstellung des Ausführungsbeispieles gemäß Fig. 1 mehr Wert auf die Verdeutlichung der funktionellen Zusammenhänge gelegt wurde als auf exakt maßstäbliche Verhältnisse.

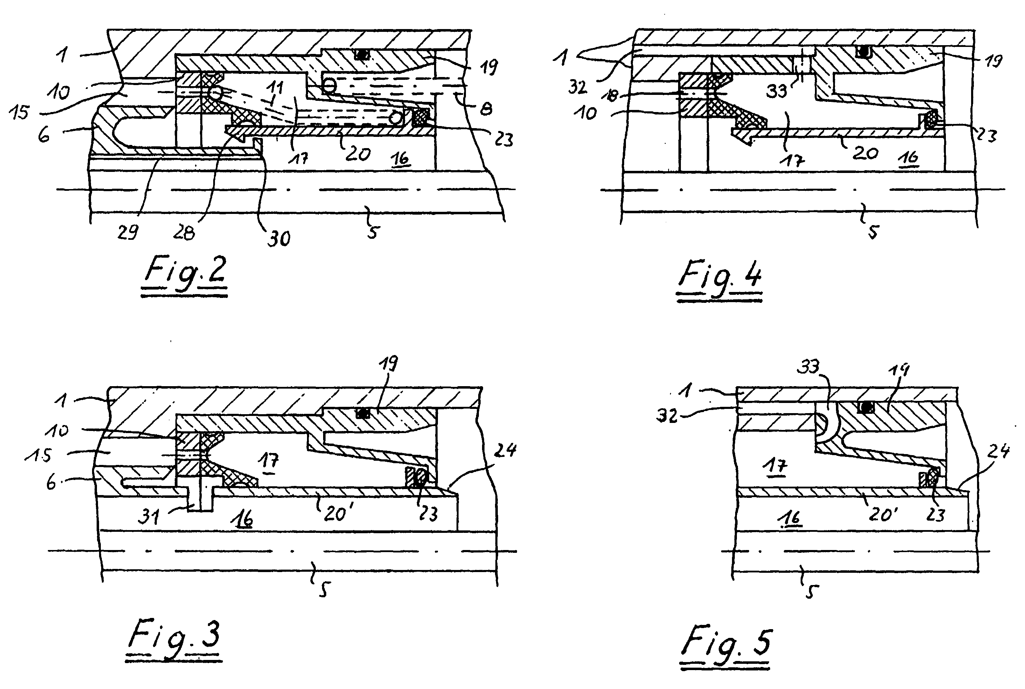

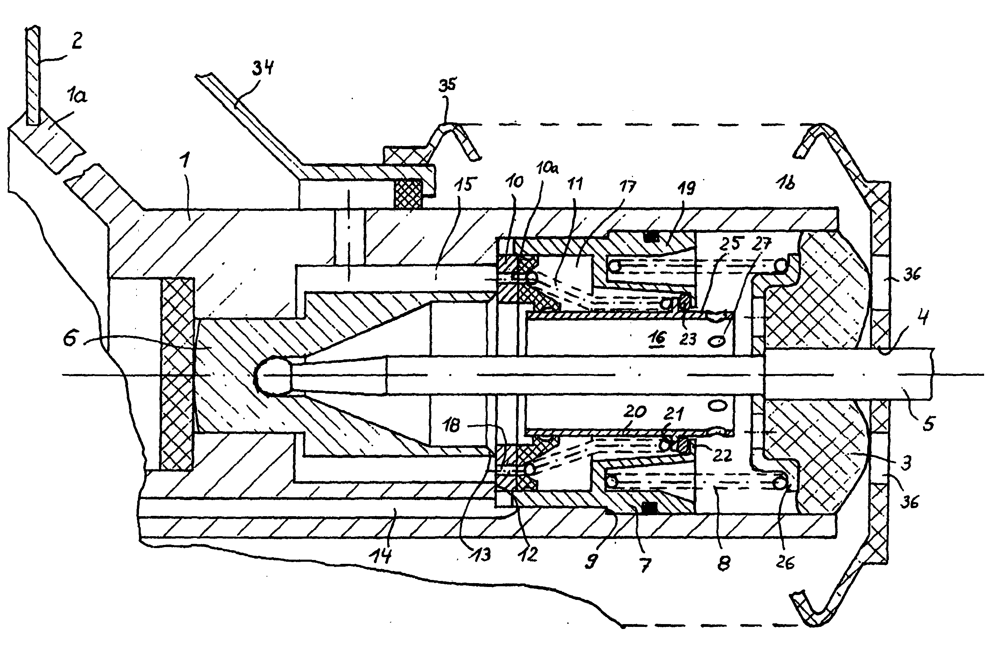

Bei dem Ausführungsbeispiel gemäß Fig. 2 soll die Hülse 20 nicht vom Federteller 26 mitgenommen werden, sondern über einen Mitnehmer 28 am vorderen Ende der Hülse und einen Gegen-Mitnehmer 29 am Ventilkolben, der mittels eines Vorsprunges 30 den Mitnehmer 28 an der Hülse 20 ergreifen kann. Alle übrigen Einzelheiten entsprechen denen in Fig. 1 und müssen nicht noch einmal erläutert werden.

Bei der Ausführungsform gemäß Fig. 3 ist die Hülse 20' einstückig mit dem Ventilkolben 6 ausgebildet und im Bereich des Ventiltellers 10 mit Durchlässen 31 ausgestattet. Alternativ zu den Durchtrittsöffnungen 27 ist die Hülse 20' am rechten Ende mit einer konischen Verjüngung 24 ausgestattet, wodurch ein zusätzlicher ringförmig umlaufender Durchtrittsquerschnitt für die Belüftung der Arbeitskammer freigegeben werden kann, wenn das konisch verjüngte Ende 24 der Hülse 20' die Dichtung 23 überfährt.

Eine weitere Möglichkeit zur Vergrößerung des Belüftungsquerschnitts in Verbindung mit einer Hülse 20 oder 20' ist in Fig. 4 dargestellt, wobei im Steuergehäuse 1 ein zusätzlicher verbindungskanal 32 zur Arbeitskammer vorgesehen ist, der über einen Durchlaß 33 mit dem Raum 17 permanent in Verbindung steht. Die Federn 8 und 11 wurden in dieser Darstellung weggelassen, um den Unterschied gegenüber Fig. 2 deutlicher hervortreten zu lassen. Auch hier bedürfen die übrigen Bauteile keiner weiteren Erläuterung.

Fig. 5 schließlich zeigt eine abgewandelte Ausführungsform des Durchlasses 33, über den der Raum 17 permanent mit dem zusätzlichen Belüftungskanal 32 in Verbindung steht. Weitere Erläuterungen sind auch hier nicht erforderlich.

Es versteht sich von selbst, daß die verschiedenen dargestellten Ausführungsformen für die Gestaltung der Hülse 20 bzw. 20' sowohl mit den Ausführungsformen des Steuergehäuses 1 ohne wie auch mit einem zusätzlichen Belüftungskanal 32 kombiniert werden können, wenn dies für die praktische Anwendung zweckmäßig erscheint. Im übrigen können selbstverständlich bei andersgearteten Steuergehäusen weitere Ausführungsformen der Hülse und/oder zusätzlicher Belüftungskanäle realisiert werden. Maßgebend ist in jedem Fall, daß der ventilträger 7 aus einem äußeren Ringkörper 19 und einer inneren, zylindrischen Hülse 20 besteht, die relativ zum Ringkörper 19 axial verschieblich angeordnet ist und die bei einer raschen Vorwärtsbewegung der Kolbenstange 5 in Bewegungsrichtung der Kolbenstange 5 mitgenommen wird und einen zusätzlichen Strömungsquerschnitt für die Belüftung der Arbeitskammer des Unterdruck-Bremskraftverstärkers freigeben kann.

### Bezugszeichenliste

- 1: Steuergehäuse
- 2: Arbeitskolben
- 3: Luftfilter
- 4: Schutzkappe
- 5: Kolbenstange
- 6: Ventilkolben
- 7: Ventilträger
- 8: Feder
- 9: Anschlag
- 10: Ventilteller
- 11: Feder
- 12: Ventilsitz
- 13: Ventilsitz
- 14: erster Raum
- 15: zweiter Raum
- 16: dritter Raum
- 17: vierter Raum
- 18: Durchlaß
- 19: Ringkörper
- 20: Hülse
- 21: Flansch
- 22: Flansch
- 23: Dichtung
- 24: Ende (konisch verjüngt an Hülse)
- 25: Verlängerung
- 26: Federteller
- 27: Durchtrittsöffnungen
- 28: Mitnehmer
- 29: Gegen-Mitnehmer
- 30: Vorsprung
- 31: Durchlaß
- 32: Kanal
- 33: Durchlaß
- 34: Verstärkergehäuse
- 35: Manschette
- 36: Lufteinlaß

## Patentansprüche

1. Ventilbaugruppe zum Steuern eines pneumatischen Unterdruck- Bremskraftverstärkers mit
- einem Steuergehäuse (1), dessen vorderes Ende (1 a) mit dem Arbeitskolben (2) des Bremskraftverstärkers verbunden ist und in dessen hinterem Ende (1 b) ein Luftfilter (3), eine Schutzkappe (4) und eine mit einem Bremspedal verbindbare Kolbenstange (5) angeordnet sind,
- einem Ventilkolben (6), der im Steuergehäuse (1) axial verschieblich gelagert ist und der mittels der Kolbenstange (5) um eine kurze Wegstrecke relativ zum Steuergehäuse (1) bewegbar ist,
- einem Ventilträger (7), der abdichtend im Steuergehäuse (1) gelagert ist und mittels einer ersten, an der Kolbenstange (5) abgestützten Feder (8) in Betätigungsrichtung der Kolbenstange (5) gegen einen Anschlag (9) im Steuergehäuse (1) vorgespannt ist und
- einem ringförmigen Ventilteller (10), der abdichtend im Ventilträger (7) gelagert und mittels einer zweiten, am Ventilträger (7) abgestützten Feder (11) in Betätigungsrichtung der Kolbenstange (5) gegen zwei am Steuergehäuse (1) und am Ventilkolben (6) ausgebildete und konzentrisch zueinander angeordnete Ventilsitze (12, 13) vorgespannt ist, wobei
- durch den äußeren Ventilsitz (12) ein erster, mit der Unterdruckkammer des Bremskraftverstärkers verbundener Raum (14) von einem zweiten, mit der Arbeitskammer des Bremskraftverstärkers verbundener Raum (15) und durch den inneren Ventilsitz (13) der zweite Raum (15) von einem die Kolbenstange (5) umgebenden und über das Luftfilter (3) mit der umgebenden Atmosphäre verbundener dritter Raum (16) absperrbar ist und wobei zwischen dem Ventilträger (7) und der den Ventilsitzen (12, 13) abgekehrten Rückseite des Ventiltellers (10) ein vierter Raum (17) ausgebildet ist, der über einen oder mehrere axiale Durchlässe (18) im Ventilteller (10) mit dem zweiten Raum (15) verbunden ist, **dadurch gekennzeichnet, daß**
- der Ventilträger (7) aus einem äußeren Ringkörper (19) und einer inneren, zylindrischen Hülse (20) besteht, die relativ zum Ringkörper (19) axial verschieblich angeordnet ist,
- zwischen radial nach außen- bzw. innenweisenden Flanschen (21, 22) an der Hülse (20) und am Ringkörper (19) eine Dichtung (23) vorgesehen ist,
- die Hülse (20) mittels der zweiten Feder (11) entgegen der Betätigungsrichtung der Kolbenstange (5) gegen die Dichtung (23) vorgespannt und von der Kolbenstange (5) relativ zum Ringkörper (19) in Betätigungsrichtung derart mitnehmbar ist, daß
- bei einer raschen Vorwärtsbewegung der Kolbenstange (5) zwischen der Hülse (20) und dem Ringkörper (19) ein Durchströmquerschnitt freigegeben wird, über den der vierte Raum (17) mit dem dritten Raum (16) verbunden wird.

2. Ventilbaugruppe nach Anspruch 1, **dadurch gekennzeichnet, daß** die Hülse (20) eine entgegen der Betätigungsrichtung der Kolbenstange (5) über den Ringkörper (19) axial vorstehende Verlängerung (25) aufweist, an der die Kolbenstange (5) zur Ausführung der Axialbewegung der Hülse (20) relativ zum Ringkörper (19) direkt oder indirekt angreift.

3. Ventilbaugruppe nach Anspruch 2, **dadurch gekennzeichnet, daß** die Kolbenstange (5) die Verlängerung (25) indirekt über einen Federteller (26) angreift, an dem sich die zwischen der Kolbenstange (5) und dem Ringkörper (19) eingespannte erste Feder (8) abstützt.

4. Ventilbaugruppe nach Anspruch 2 oder 3, **dadurch gekennzeichnet, daß** die Verlängerung (25) eine zylindrische Wandung mit Durchtrittsöffnung (27) aufweist.

5. Ventilbaugruppe nach Anspruch 2 oder 3, **dadurch gekennzeichnet, daß** die Verlängerung (25) aus drei oder mehr verlängerten Mantelabschnitten der zylindrischen Hülse (20) besteht.

6. Ventilbaugruppe nach Anspruch 1, **dadurch gekennzeichnet, daß** die Hülse (20) am vorderen Ende einen radial nach innen vorstehenden Mitnehmer (28) aufweist, der zur Ausführung der Axialbewegung der Hülse (20) relativ zum Ringkörper (19) mit einem Gegenmitnehmer (29) zusammenwirkt, der am Ventilkolben (6) ausgebildet oder angebracht ist.

7. Ventilbaugruppe nach Anspruch 6, **dadurch gekennzeichnet, daß** der Mitnehmer (28) aus einem innenseitig umlaufenden Flansch besteht.

8. Ventilbaugruppe nach Anspruch 6 oder 7, **dadurch gekennzeichnet, daß** am Ventilkolben (6) drei oder mehr Arme mit radial nach außenweisenden Vorsprüngen als Gegen-Mitnehmer (29) ausgebildet oder angebracht sind.

9. Ventilbaugruppe nach Anspruch 1, **dadurch gekennzeichnet, daß** die Hülse (20') einstückig mit dem Ventilkolben (6) ausgebildet oder fest mit dem Ventilkolben (6) verbunden ist.

10. Ventilbaugruppe nach Anspruch 9, **dadurch gekennzeichnet, daß** die Hülse (20') einen oder mehrere Durchlässe (31) aufweist, über die der Innenraum der Hülse (20') mit dem zweiten Raum (15) verbunden werden kann.

11. Ventilbaugruppe nach einem der Ansprüche 1 bis 10, **dadurch gekennzeichnet, daß** am hinteren Ende der Hülse (20, 20') eine oder mehrere Durchlaßöffnungen in Form von Ausnehmungen oder einer umlaufenden konischen Verjüngung (24) vorgesehen sind, die bei einer Bewegung der Hülse (20, 20') relativ zum Ringkörper freigegeben werden.

12. Ventilbaugruppe nach einem der Ansprüche 1 bis 11, **dadurch gekennzeichnet, daß** im steuergehäuse (1) ein oder mehrere axial ausgerichtete Kanäle (32) oder dergleichen vorgesehen sind, die im zusammenwirken mit Durchlässen (33) im Ringkörper (19) den vierten Raum (17) zusätzlich zu den im Ventilteller (10) vorhandenen Durchlässen (18) mit dem zweiten Raum (15) verbinden.

## Claims

1. Valve assembly for controlling a pneumatic vacuum brake booster comprising
- a control housing (1) whose front end (1a) is connected to the working piston (2) of the brake booster and whose rear end (1b) accommodates an air filter (3), a protective cap (4), and a piston rod (5) connectable to a brake pedal,
- a valve piston (6) that is axially displaceably mounted in the control housing (1) and is movable a short distance relative to the control housing (1) by means of the piston rod (5),
- a valve carrier (7) which is sealingly mounted in the control housing (1) and biased in the actuating direction of the piston rod (5) against a stop (9) in the control housing (1) by means of a first spring (8) supported on the piston rod (5), and
- an annular valve plate (10) that is sealingly mounted in the valve carrier (7) and, by means of a second spring (11) supported on the valve carrier (7), is biased in the actuating direction of the piston rod (5) against two valve seats (12, 13) designed on the control housing (1) and on the valve piston (6) and arranged concentrically relative to each other, wherein
- the outside valve seat (12) can isolate a first chamber (14) connected to the vacuum chamber of the brake booster from a second chamber (15) connected to the working chamber of the brake booster, and the inside valve seat (13) can isolate the second chamber (15) from a third chamber (16) encompassing the piston rod (5) and being connected to the atmosphere by way of the air filter (3), and wherein a fourth chamber (17) is arranged between the valve carrier (7) and the back side of the valve plate (10) remote from the valve seats (12, 13), said chamber (17) being connected to the second chamber (15) by way of one or more axial passages (18) in the valve disc (10),
**characterized in that**
- the valve carrier (7) is composed of an outside annular member (19) and an inside cylindrical sleeve (20) which is axially displaceably arranged relative to the annular member (19),
- a seal (23) is interposed between radially outwards or inwards pointing flanges (21, 22) at the sleeve (20) and at the annular member (19),
- the sleeve (20) is biased by means of the second spring (11) against seal (23) in opposition to the actuating direction of the piston rod (5) and is adapted to be entrained by the piston rod (5) in the actuating direction relative to the annular member (19) in such a manner that
- a flow cross-section between the sleeve (20) and the annular member (19) is opened in the event of a quick forward movement of the piston rod (5), thereby connecting the fourth chamber (17) to the third chamber (16).

2. Valve assembly as claimed in claim 1,
**characterized in that** the sleeve (20) includes an extension (25) that projects axially from the annular member (19) in opposition to the actuating direction of the piston rod (5), the piston rod (5) making catch at said extension directly or indirectly to execute the axial movement of the sleeve (20) relative to the annular member (19).

3. Valve assembly as claimed in claim 2,
**characterized in that** the piston rod (5) makes catch at the extension (25) indirectly by way of a spring disc (26) on which the first spring (8) compressed between piston rod (5) and annular member (19) is supported.

4. Valve assembly as claimed in claim 2 or 3,
**characterized in that** the extension (25) includes a cylindrical wall with opening (27).

5. Valve assembly as claimed in claim 2 or 3,
**characterized in that** the extension (25) is composed of three or more extended peripheral portions of the cylindrical sleeve (20).

6. Valve assembly as claimed in claim 1,
**characterized in that** the front end of sleeve (20) includes a radially inwards projecting dog (28) which, for execution of the axial movement of sleeve (20), cooperates with a mating dog (29) that is designed or fitted at the valve piston (6).

7. Valve assembly as claimed in claim 6,
**characterized in that** the dog (28) comprises a circumferential flange on the inside.

8. Valve assembly as claimed in claim 6 or 7,
**characterized in that** three or more arms with radially outwards pointing projections are designed or fitted as mating dogs (29) at the valve piston (6).

9. Valve assembly as claimed in claim 1,
**characterized in that** the sleeve (20') is designed integrally with the valve piston (6) or connected rigidly to the valve piston (6).

10. Valve assembly as claimed in claim 9,
**characterized in that** the sleeve (20') includes one or more passages (31) through which the interior of the sleeve (20') can be connected to the second chamber (15).

11. Valve assembly as claimed in any one of claims 1 to 10,
**characterized in that** one or more openings are configured as recesses or a circumferential conical taper (24) at the rear end of sleeve (20, 20'), said openings being opened when the sleeve (20, 20') moves in relation to the annular member.

12. Valve assembly as claimed in any one of claims 1 to 11,
**characterized in that** one or more axially aligned channels (32) or like elements are provided in the control housing (1) and, in cooperation with passages (33) in the annular member (19), connect the fourth chamber (17) to the second chamber (15) in addition to the passages (18) existing in valve plate (10).

## Revendications

1. Ensemble soupape pour commander un servofrein pneumatique à vide comportant
- un boîtier de commande (1) dont l'extrémité avant (a) est reliée au piston de travail (2) du servofrein et dans l'extrémité arrière (1b) duquel sont disposés un filtre à air (3), un capuchon de protection (4) et une tige de piston (5) pouvant être reliée à une pédale de frein,
- un piston de soupape (6) qui est monté de manière à pouvoir coulisser axialement dans le boîtier de commande (1) et qui est déplaçable, au moyen de la tige de piston (5), d'une courte distance par rapport au boîtier de commande (1),
- un porte-soupape (7) qui est monté de manière étanche dans le boîtier de commande (1) et qui est précontraint, au moyen d'un premier ressort (8) en appui sur la tige de piston (5), dans le sens d'actionnement de la tige de piston (5), contre une butée (9) dans le boîtier de commande (1), et
- une tête de soupape (10) de forme annulaire qui est montée de manière étanche dans le porte-soupape (7) et qui est précontrainte, au moyen d'un deuxième ressort (11) en appui sur le porte-soupape (7) dans le sens d'actionnement de la tige de piston (5) contre deux sièges de soupape (12, 13) réalisés sur le boîtier de commande (1) et sur le piston de soupape (6), et disposés concentriquement l'un à l'autre,
- par le premier siège de soupape extérieur (12), un premier volume (14), relié à la chambre sous vide du servofrein, pouvant être séparé d'un deuxième volume (15) relié à la chambre de travail du servofrein, et par le siège de soupape intérieur (13), le deuxième volume (15) pouvant être séparé d'un troisième volume (16) entourant la tige de piston (5) et relié à l'atmosphère environnante par le filtre à air (3), et entre le porte-soupape (7) et la face arrière de la tête de soupape (10), tournée à l'opposé des sièges de soupape (13), étant réalisé un quatrième volume (17) qui est relié au deuxième volume (15) par un ou plusieurs passages axiaux (18) dans la tête de soupape (10), **caractérisé en ce que**
- le porte-soupape (7) est constitué d'un corps annulaire extérieur (19) et d'un manchon cylindrique (20) intérieur qui est disposé de manière à pouvoir coulisser axialement par rapport au corps annulaire (19),
- il est prévu une garniture d'étanchéité (23) entre des brides (21, 22) dirigées vers l'extérieur ou vers l'intérieur sur le manchon (20) ou sur le corps annulaire (19),
- le manchon (20) est précontraint, au moyen du deuxième ressort (11), dans le sens contraire au sens d'actionnement de la tige de piston (5) contre la garniture d'étanchéité (23), et peut être entraîné par la tige de piston (5) par rapport au corps annulaire (15), dans le sens d'actionnement, de manière que
- en cas de mouvement d'avance rapide de la tige de piston (5) soit dégagée, entre le manchon (20) et le corps annulaire (19), une section d'écoulement par laquelle le quatrième volume (17) est relié au troisième volume (16).

2. Ensemble soupape selon la revendication 1, **caractérisé en ce que** le manchon (20) comporte un prolongement (25) dépassant axialement du corps annulaire (19), dans le sens contraire au sens d'actionnement de la tige de piston (5), prolongement sur lequel la tige de piston (5) agit directement ou indirectement pour réaliser le mouvement axial du manchon (20) par rapport au corps annulaire (19).

3. Ensemble soupape selon la revendication 2, **caractérisé en ce que** la tige de piston (5) agit indirectement sur le prolongement (25), par une coupelle de ressort (26) sur laquelle prend appui le premier ressort (8) serré entre la tige de piston (5) et le corps annulaire (19).

4. Ensemble soupape selon la revendication 2 ou 3, **caractérisé en ce que** le prolongement (25) comporte une paroi cylindrique avec orifice de passage (27).

5. Ensemble soupape selon la revendication 2 ou 3, **caractérisé en ce que** le prolongement (25) est constitué de trois tronçons d'enveloppe prolongés ou plus du manchon cylindrique (20).

6. Ensemble soupape selon la revendication 1, **caractérisé en ce que** le manchon (20) comporte, à l'extrémité avant, un entraîneur (28) dépassant radialement vers l'intérieur qui, pour l'exécution du mouvement axial du manchon (20) par rapport au corps annulaire (19), coopère avec un contre-entraîneur (29) qui est réalisé ou fixé sur le piston de soupape (6).

7. Ensemble soupape selon la revendication 6, **caractérisé en ce que** l'entraîneur (28) est constitué d'une bride périphérique côté intérieur.

8. Ensemble soupape selon la revendication 6 ou 7, **caractérisé en ce que** sur le piston de soupape (6) sont réalisés ou fixés trois bras ou plus présentant des saillies dirigées radialement vers l'extérieur, servant de contre-entraîneur (29).

9. Ensemble soupape selon la revendication 1, **caractérisé en ce que** le manchon (20') est réalisé d'un seul tenant avec le piston de soupape (6) ou est relié de manière fixe au piston de soupape (6).

10. Ensemble soupape selon la revendication 9, **caractérisé en ce que** le manchon (20') présente un ou plusieurs passages (31) par lesquels le volume intérieur du manchon (20') peut être relié au deuxième volume (15).

11. Ensemble soupape selon l'une des revendications 1 à 10, **caractérisé en ce qu'**à l'extrémité arrière du manchon (20, 20') sont prévus un ou plusieurs orifices de passage sous la forme d'évidements ou d'un rétrécissement conique (24) périphérique, qui sont dégagés lors d'un mouvement du manchon (20, 20') par rapport au corps annulaire.

12. Ensemble soupape selon l'une des revendications 1 à 11, **caractérisé en ce que** dans le boîtier de commande (1) sont prévus un ou plusieurs canaux (32) dirigés axialement ou similaires qui, en coopération avec les passages (33) dans le corps annulaire (19), relient le quatrième volume (17), en plus des passages (18) existant dans la tête de soupape (10), au deuxième volume (15).
